(19) **Europäisches Patentamt**

**European Patent Office**

**Office européen des brevets**

(11) **EP 1 362 754 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **B60T 8/00**

(21) Anmeldenummer: **03007325.8**

(22) Anmeldetag: **01.04.2003**

(54) **Verfahren zur Erhöhung der Fahrstabilität bei einem Fahrzeug**

Vehicle stability enhancing method

Procédé pour l'augmentation de la stabilité d'un véhicule

(84) Benannte Vertragsstaaten:
**DE FR GB IT**

(30) Priorität: **16.05.2002 DE 10221717**

(43) Veröffentlichungstag der Anmeldung:
**19.11.2003 Patentblatt 2003/47**

(73) Patentinhaber: **Bayerische Motoren Werke Aktiengesellschaft
80809 München (DE)**

(72) Erfinder:
 • **Baumgarten, Götz
  85757 Karlsfeld (DE)**
 • **Lohninger, Roland
  80809 München (DE)**

(56) Entgegenhaltungen:
 **DE-A- 10 009 921      DE-A- 10 105 710
 US-A- 6 092 882**

**Beschreibung**

Die Erfindung betrifft ein Verfahren zur Erhöhung der Fahrstabilität bei einem Fahrzeug, welches durch einen Regeleingriff am Fahrzeug ein einer Fahrzeug-Instabilität entgegenwirkendes Giermoment bewirkt und wobei das Maß des Regeleingriffes von einem Reglerkommando abhängt, welches in Abhängigkeit von der Differenz aus dem Quotienten von Fahrzeugquerbeschleunigung ("by") und Fahrzeuggeschwindigkeit ("V") einerseits und der tatsächlich auftretenden Gierrate ("r") andererseits bestimmt wird, derart, dass das Reglerkommando auch abhängig vom Minimum aus den Absolutwerten des geeignet gefilterten Quotienten aus Fahrzeugquerbeschleunigung und Fahrzeuggeschwindigkeit einerseits und eines in Abhängigkeit vom Fahrer-Lenkwinkel ($\delta_L$") vorzugsweise unter Verwendung der Ackermann-Beziehung berechneten Gierraten-Sollwertes ("rsoll-acker3" andererseits gewählt wird.

Die deutsche Offenlegungsschrift DE 100 09 921 A1 beschreibt diesen im Oberbegriff des Anspruchs 1 der vorliegenden Patentanmeldung wiedergegebenen bekannten Stand der Technik.

Diese genannte DE 100 09 921 A1 beschreibt einen sog. Querbeschleunigungszweig in einem Regelkreis für ein elektronisch initiierte Eingriffe erlaubendes Fzg.-Lenksystem, wobei ein Reglerkommando aus einer Minimumbildung zwischen den Absolutwerten des geeignet gefilterten Quotienten aus der Fahrzeugquerbeschleunigung und der Fahrzeuggeschwindigkeit einerseits und eines in Abhängigkeit vom Fahrer-Lenkwinkel unter Verwendung der Akkermann-Beziehung berechneten Gierraten-Sollwertes andererseits gewählt wird. Hierdurch kann bei einer vorliegenden Reifensättigung der lenkwinkelabhängige Gierratensollwert reduziert werden, falls er zu groß ist. In diesen Fällen kann dann mit Hilfe der Fzg.-Querbeschleunigung bzw. dem besagten Quotienten aus der Querbeschleunigung und der Fzg.-Geschwindigkeit ein besserer, vom Betrag reduzierter Ersatzwert für den Gierraten-Sollwert erzeugt werden. Gemäß der nicht vorveröffentlichten deutschen Offenlegungsschrift DE 10 141 273 A1 kann der genannte Quotient (dort sowie in der vorliegenden Anmeldung mit r_by" bezeichnet) noch durch additive lenkwinkelabhängige Signale in seiner Dynamik an den Verlauf des vorzugsweise unter Verwendung der Ackermann-Beziehung berechneten Gierraten-Sollwertes (dort sowie hier mit "rsoll_acker" bezeichnet) angeglichen werden, woraus ein sog. gefilterter Quotient (aus der Querbeschleunigung "by" und der Fzg.-Geschwindigkeit "V") ermittelt werden kann, der hier nun mit "r_by_filt" bezeichnet wird.

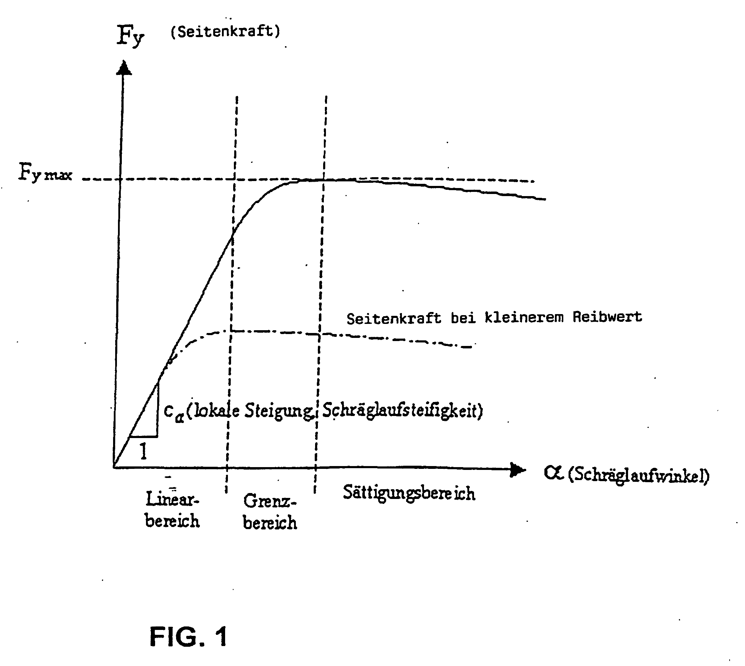

Lediglich für die Vollständigkeit der vorliegenden Beschreibung wird kurz auf die beigefügte **Figur 1** verwiesen, die als sog. Seitenkraft-Diagramm die Abhängigkeit der Seitenkraft ("Fy") eines Reifens oder einer gesamten Achse vom Schräglaufwinkel ("$\alpha$") graphisch zeigt. Wie bereits in der o.g. DE 100 09 921 A1 beschrieben ist, besitzt diese (Reifen)-Kennlinie zunächst einen Linearbereich, an den sich über einen sog. Grenzbereich der Bereich der Reifen-Sättigung anschließt und der fahrdynamisch relativ kritisch ist, da man dann trotz Erhöhung des Schräglaufwinkelbetrags praktisch keine weitere Erhöhung der Seitenkraft erreichen kann.

Nach dem genannten bekannten Stand der Technik vergleicht die genannte Minimumbildung die Absolutwerte bzw. Beträge von "r_by_filter" und von "rsoll_acker" miteinander, woraus für den Absolutwert des resultierenden Reglerkommandos ("rsoll_res" genannt) die folgende Gleichung gilt:

$$[1] \qquad abs(rsoll\_res) = MIN\,[\,abs(rsoll\_acker),\,abs(r\_by\_filt)\,]$$

Demzufolge wirkt der sog. Querbeschleunigungszweig immer dann auf die Bildung des Gierratensollwertes ein, wenn die folgende Bedingung [2] erfüllt ist:

$$[2] \qquad abs(rsoll\_acker) > abs(r\_by\_filt)$$

Wie im genannten Stand der Technik ausgeführt ist, ist der lenkwinkelabhängige Gierraten-Sollwert "rsoll_acker" dann ausreichend, wenn keine Reifensättigung vorliegt und sich der Reifen folglich im sog. Linearbereich des Seitenkraftdiagramms befindet, so dass dann der sog. Querbeschleunigungszweig, nämlich "r_by_filt" überhaupt nicht wirksam werden muss. Tatsächlich soll dieser sog. Querbeschleunigungszweig nur im Grenzbereich oder Sättigungsbereich (vgl. **Fig.1**) des Reifens eingreifen.

Wenn man nun die Stabilität des Reglers analysieren will, so hat hierauf ein Vorsteuerkommando keinen Einfluss und es kann auch die Bildung des Gierraten-Sollwertes unberücksichtigt bleiben. Für eine Stabilitätsanalyse müssen folglich nur die Rückführungen im Regelkreis betrachtet werden. Dann wird das Reglerkommando nur noch aus dem Anteil der Gierratenrückführung sowie dem eventuell wirksamen Querbeschleunigungszweig gebildet. Dieses spezielle vereinfachte Reglerkommando wird im weiteren mit "fb" bezeichnet.

Zur Herleitung der vorliegenden Erfindung wird nun zunächst davon ausgegangen, dass der die Querbeschleunigung "by" verarbeitende sog.

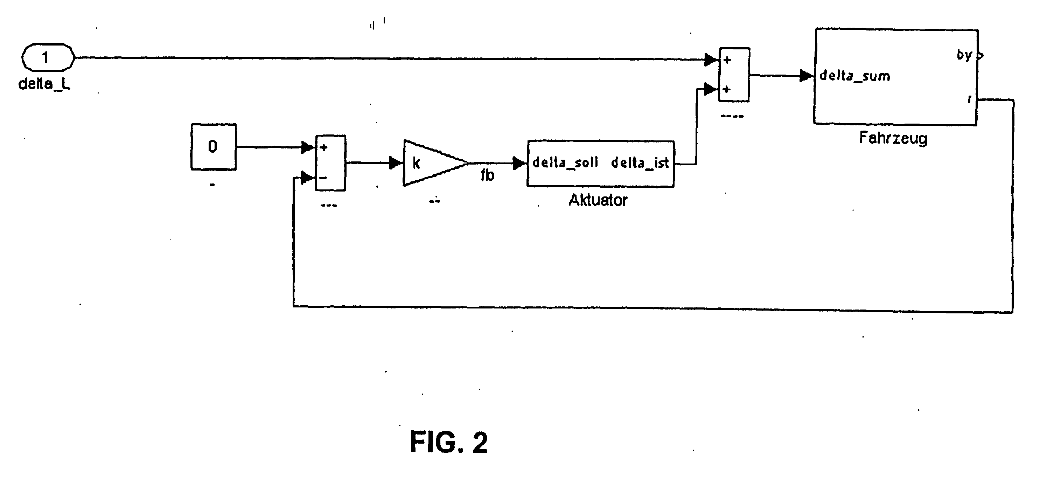

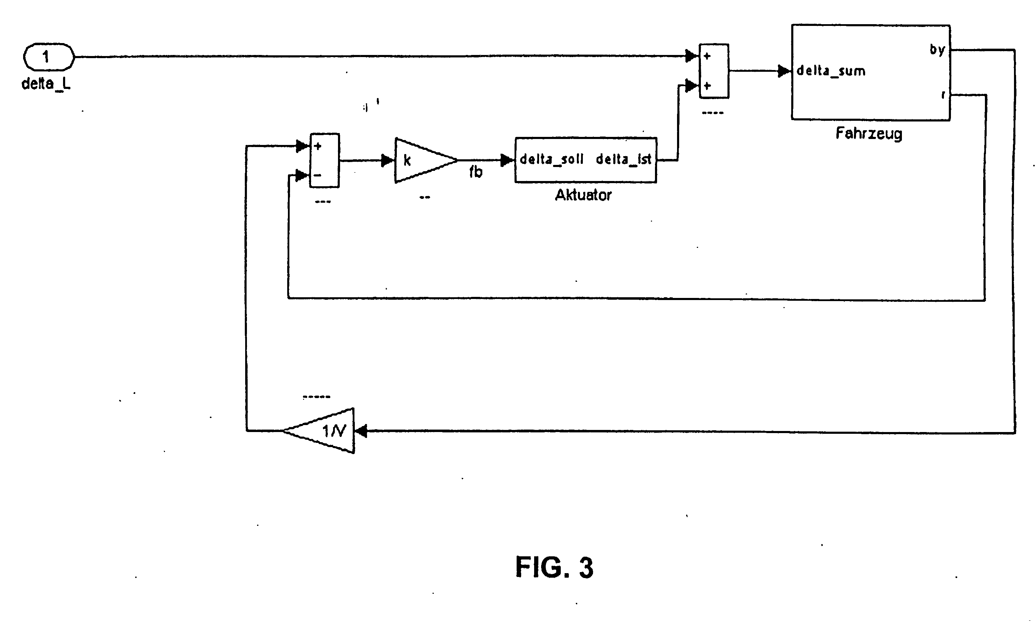

Querbeschleunigungszweig nicht wirksam sei, woraus sich das genannte vereinfachte Reglerkommando wie

folgt ergibt:

$$[3] \qquad fb = - k \cdot r$$

wobei "k" eine geeignete Konstante und "r" die tatsächliche Gierrate des Fahrzeugs ist. Diese vereinfachte stabilitätsrelevante Reglerstruktur ohne wirksamen Querbeschleunigungszweig ist in der beigefügten **Fig.2** dargestellt. Demgegenüber zeigt **Fig.3** diese vereinfachte stabilitätsrelevante Reglerstruktur mit wirksamen Querbeschleunigungszweig entsprechend der folgenden Gleichung [3] zur Bildung des vereinfachten Reglerkommandos :

$$[4] \qquad fb = k \cdot (r\_by - r) = k \cdot \dot{\beta}$$

wobei mit $\beta$ die Schwimmwinkelgeschwindigkeit des Fahrzeugs bezeichnet ist.

Wie in der bereits mehrfach genannten DE 100 09 921 A1 ausgeführt ist, ist der sog. Querbeschleunigungszweig, in dem die rückgeführte Querbeschleunigung "by" berücksichtigt wird, zumeist nur außerhalb des Linearbereichs der Abhängigkeit der Seitenkraft ("Fy") vom Schräglaufwinkel ("$\alpha$") relevant, d.h. nur dann, wenn man sich im Grenzbereich oder im Sättigungsbereich gemäß **Fig.1** bewegt

Es gibt jedoch weitere Situationen, die dazu führen, dass der sog. Querbeschleunigungszweig wirksam ist, und zwar auch dann, wenn das Fzg. noch im genannten Linearbereich des Seitenkraftdiagramms gemäß **Fig.1** bewegt wird. Betrachtet man die obigen Gleichungen [1] und [2], so ergibt sich, dass dies für all jene Fälle gilt, in denen die Querbeschleunigung "by" aufgrund irgendwelcher Einflüsse derart verfälscht ist, dass sie vom Betrag her kleiner wird als es den eigentlichen Umständen entspricht. Dies kann bspw. dann der Fall sein, wenn im Querbeschleunigungssensor ein Offset vorhanden ist, oder wenn das Fzg. durch eine sog. Steilwandkurve bewegt wird, bei welcher bekanntermaßen die Fahrbahn in Richtung zum Kurvenmittelpunkt hin abfallend geneigt ist. Nun hat sich gezeigt, dass in solchen Fällen geringfügige Stabilitätsunstimmigkeiten auftreten können. Ursächlich hierfür ist, dass im genannten Linearbereich der Abhängigkeit der Reifenseitenkraft ("Fy") vom Schräglaufwinkel ("$\alpha$") die Schräglaufsteifigkeit größer als im Bereich der genannten Reifensättigung ist. Mit dem genannten Faktor "k" ist jedoch eine Stabilität nur für obige Gleichung [3], nicht jedoch für Gleichung [4] einstellbar.

Würde man nun auf gängige Weise diese Unstimmigkeiten beheben wollen, so könnte man die Stabilitätsreserven für den Fall der Gleichung [4] durch möglichst weitgehende Verringerung der Phasenverzögerung verbessern, was jedoch keinen Erfolg bringt, da die inhärenten Phasenverzögerungen entweder physikalischer Natur und somit unvermeidbar sind, und da die bekannten Vorhaltefilter wegen ihrer Messrauschverstärkung nicht verwendbar sind.

Theoretisch könnte man auch durch Einführen einer weiteren Verstärkung (hier "k2" genannt) im sog. Querbeschleunigungszweig die Stabilitätsreser ven für den Fall der Gleichung [4] verbessern, womit sich Gleichung [5] ergäbe:

$$[5] \qquad fb = k \cdot (k2 \cdot r\_by - r)$$

Dies ist jedoch ausgeschlossen, da die in Gleichung [4] enthaltene Verstär kung des Querbeschleunigungszweigs ("r_by") vom Wert "1" sein muss, damit sich im Stationärfall das vereinfachte Reglerkommando "fb" wegen der dann vorliegenden Gleichheit des Quotienten "r_by" und der Gierrate "r" (d.h. r_by = r) zu "Null" ergibt, und dass außerdem bei Reifensättigung der zu große Lenkwinkelsollwert "rsoll_acker" richtig reduziert wird. Theoretisch wäre es im übrigen auch denkbar, die Regelverstärkung "k" in der Gleichung [4] zu reduzieren, was jedoch die Stabilisierungswirkung des Reglers verkleinern würde und somit ebenfalls ungeeignet ist.

Eine demgegenüber praktikable Abhilfemaßnahme für die weiter oben geschilderte Problematik aufzuzeigen, ist daher Aufgabe der vorliegenden Erfindung.

Die Lösung dieser Aufgabe ist dadurch gekennzeichnet, das Reglerkommando in den Fällen, in denen der gefilterte Quotient aus Fahrzeugquerbeschleunigung und Fahrzeuggeschwindigkeit einerseits und der Gierraten-Sollwert andererseits unterschiedliche Vorzeichen haben, den Wert "Null" annimmt. Vorteilhafte Weiterbildungen sind Inhalt der Unteransprüche.

Erfindungsgemäß wird dann, wenn die Signale "rsoll_acker" und "r_by_filt" unterschiedliche Vorzeichen haben, der Wert für das Reglerkommando, das hier sowie in der bereits mehrfach genannten DE 100 09 921 A1 als resultierender Gierratensollwert "rsoll_res" bezeichnet wird bzw. wurde, zu "Null" gesetzt. Hierdurch wird vermieden, dass die Größe "r_by_filt" mit umgekehrtem Vorzeichen, d.h. an der Abszisse gespiegelt, den resultierenden Gierratensollwert ergibt, denn eine solche Vorzeichenumkehr hätte unerwünschte Auswirkungen auf die Stabilität und ist daher zu vermeiden. Die vorgeschlagene Nullsetzung des resultierenden Gierraten-Sollwerts der Minimumbildung bzw. des Reglerkommandos im Falle unterschiedlicher Vorzeichen der Eingangssignale der Minimumbildung schafft hier die gewünschte Abhilfe.

Sehr hilfreich ist im übrigen die aus der gattungsbildenden DE 100 09 921 A1 bzw. dem bekannten Stand der Technik zur vorliegenden Erfindung bereits bekannte Einführung eines Verzögerungsgliedes im sog. Querbeschleunigungszweig zur Verbesserung des Stabilitätsverhaltnes des Regelkreises. Beispielsweise mit einem Verzögerungsglied erster Ordnung (bspw. mit der bekannten Übertragungsfunktion $\{Ts+1\}^{-1}$ im Querbeschteunigungszweig, das eine geeignete Filterung des Quotienten aus der Fahrzeugquerbeschleunigung und der Fahrzeuggeschwindigkeit darstellt, ergibt sich die folgende Gleichung [6] für das vereinfachte Reglerkommando "fb":

$$[6] \qquad fb = k \cdot ((Ts+1)^{-1} \cdot r\_by - r)$$

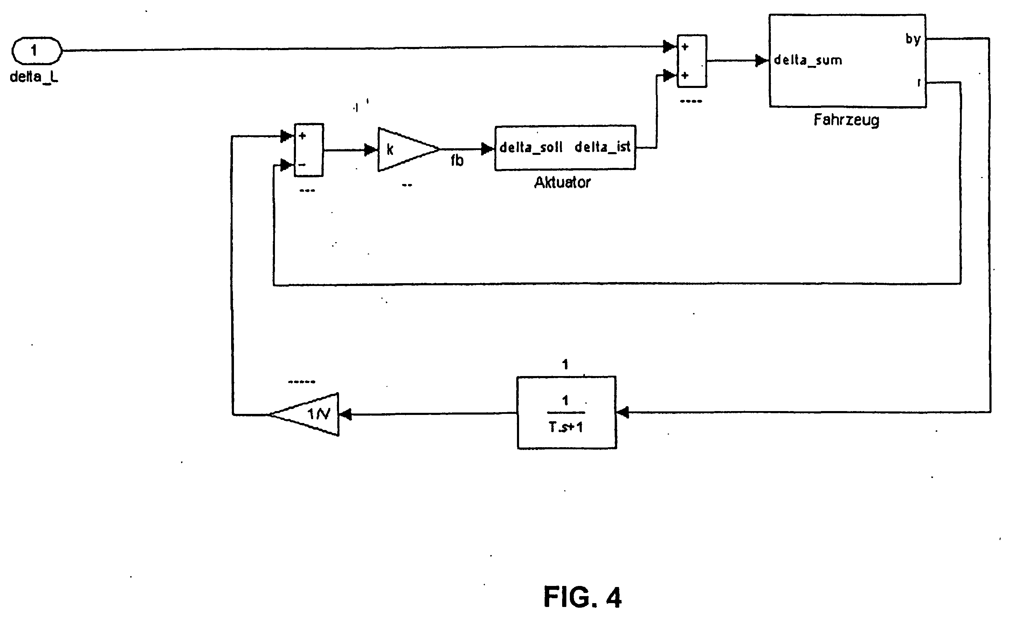

Damit kann die Stabilität des Reglers mit wirksamen Querbescheunigungszweig auch im genannten Linearbereich unterhalb der Reifensättigung hergestellt werden. Die Zeitkonstante "T" kann dabei so eingestellt werden, dass die Dämpfung des Regelkreises mit und ohne wirksamen Querbeschleunigungszweig gleich gut ist. Zwar erzeugt dann ein Offset im Querbeschleunigungssensor oder eine Fahrt in einer Steilwandkurve (d.h. die oben geschilderten möglichen Ursachen für Stabilitätsunstimmigkeiten) weiterhin einen Eingriff durch den Regler, jedoch ist dieser dann stabil und daher nicht weiter störend. Der Fahrer muss also in diesem Fall (also bei Durchfahren einer Steilwandkurve) lediglich einen etwas größeren Lenkwinkel aufbringen als beim Durchfahren einer flachen, ebenen Kurve mit dem selben Kurvenradius. Mit einem derartigen Verzögerungsglied im Querbeschleunigungszweig ergibt sich somit die in **Fig.4** dargestellte Struktur des Regelkreises.

Zurückkommend auf die erfindungsgemäße Null-Setzung der Reglerkommandos bzw. des resultierender Gierratensollwertes "rsoll_res" kann die entsprechend abgewandelte Minimumbildung dabei auch als fallbasierte Anweisung geschrieben werden oder in Form ein sog. Begrenzungsglieds umgesetzt sein, in dem die Werte für den geeignet gefilterten Quotienten aus Fahrzeugquerbeschleunigung und Fahrzeuggeschwindigkeit einerseits und den in Abhängigkeit vom Fahrer-Lenkwinkel berechneten Gierraten-Sollwert andererseits verglichen werden, woraus sich das folgenden Reglerkommando ergibt:

a) falls sich die genannten Eingangswerte in ihrem Vorzeichen unterscheiden, ist das Reglerkommando gleich "0"

b) falls der Betrag des genannten Quotienten kleiner als der Betrag des Gierraten-Sollwertes ist, ist das Reglerkommando gleich dem genannten Quotienten

c) andernfalls ist das Reglerkommando gleich dem Gierraten-Sollwert.

Das genannte Begrenzungsglied lässt sich dabei durch die folgende Gleichung [7] beschreiben :

$$[7] \qquad fb = k \cdot \left\{ sat\left[ \frac{1}{Ts+1} \cdot \frac{\dot{b}_y}{V} \right]_a^b - \dot{r} \right\}$$

mit a = 0 und b = rsoll_acker, falls rsoll_acker > 0 ist, bzw.
mit a = rsoll_acker und b = 0, falls rsoll_acker < 0 ist.

Die in Gleichung [7] enthaltene Funktion

$$\left\{ sat[x]_a^b \right\}$$

bedeutet dabei, dass der Funktionswert durch a < b begrenzt wird und für a < x < b den Wert x annimmt, für x < a den Wert a annimmt und für x > b den Wert b annimmt.

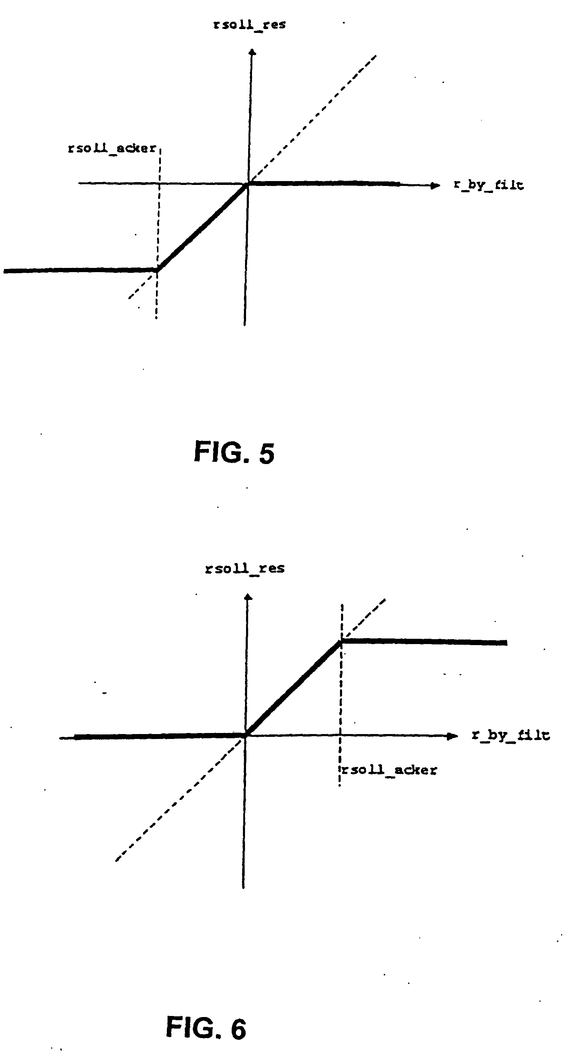

Anhand der beigefügten Figuren 5 und 6 wird diese Begrenzung wird durch zwei Beispiele illustriert. In der Darstellung gemäß **Fig. 5** ist der Wert "rsoll_acker" < 0 und in derjenigen nach **Fig. 6** ist der Wert "rsoll_acker" > 0. Die lenkwinkelabhängige Sollgierrate "rsoll_acker" wird also jetzt nur noch als eine der beiden Grenzen im Begrenzungsglied benutzt. Dabei ist anzumerken, dass dieses vorgeschlagene Begrenzungsglied die in der genannten DE 100 09 921 A1 enthaltene Minimumbildung quasi erweitert.

Bevorzugt wird die Größe "rsoll_acker" dabei derart appliziert, dass im Stationärfall die folgende Gleichung [8] gilt, d.h. dass im Stationärfäll der Gierraten-Sollwert größer als der genannte und geeignet gefilterte Quotient aus Fahrzeugquerbeschleunigung und Fahrzeuggeschwindigkeit ist.:

$$[8] \qquad \text{abs(rsoll\_acker)} > \text{r\_by\_filt} = \text{r\_by} = \text{r}$$

Dieser Zusammenhang gilt im übrigen auch im gesamten Linearbereich der Seitenkraftkennlinie nach **Fig.1**.

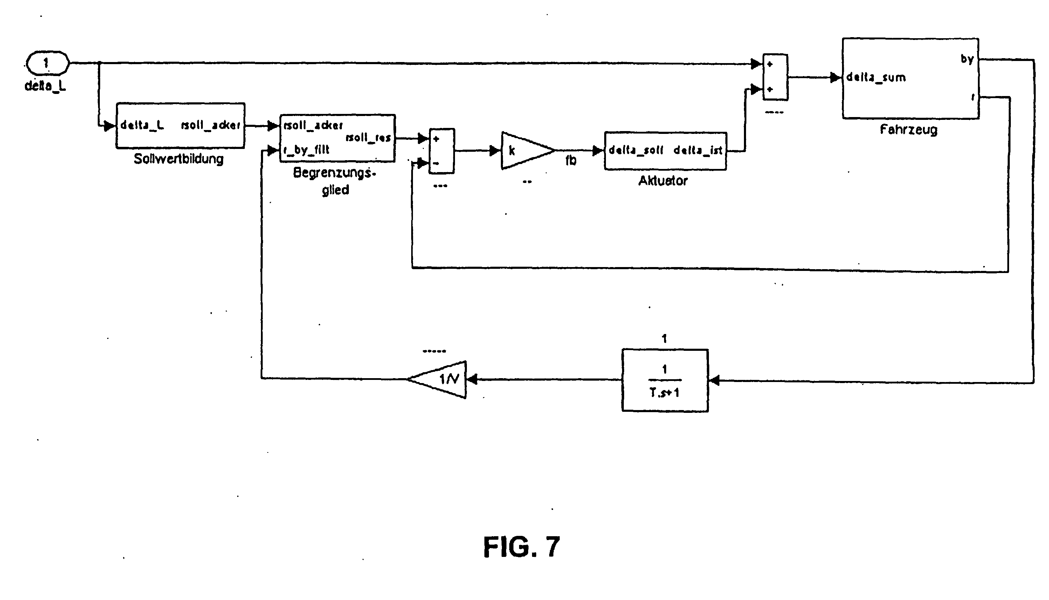

Dabei ist die Größe "rsoll_acker" insofern wichtig, als dann, wenn der Fahrer des Fahrzeugs versucht, einer Instablität des Fzg's durch Gegenlenken entgegenzuwirken, die applizierte Gierratenregelung sein Gegenlenken unterstützen bzw. vergrößern soll. Das Gegenlenken des Fahrers geht dann über den Lenkradwinkel zu "rsoll_acker" in die Begrenzung von "r_by_filt" zum Signal Reglerkommando "rsoll_res" und von da ins genannte vereinfachte Reglerkommando "fb" letztlich zum Stellkommando für den den Lenkeinschlag der lenkbaren Fzg.-Räder bestimmenden Aktuator. Diese resultierende Regler-Struktur ist in **Figur 7** gezeigt.

Im weiteren wird eine vorteilhafte Weiterbildung der vorliegenden Erfindung beschrieben, nämlich ein sog. Dynamikangleich, der nun hier an das Verfahren nach dem vorliegenden Patentanspruch 1 angepasst wird. Zunächst diesen sog. Dynamikangleich erläuternd hat sich gezeigt, dass eine unterschiedliche Dynamik in den Verläufen von "rsoll_acker" und "r_by" vorliegt, und zwar insbesondere im linearen Querdynamikbereich des Fahrzeugs, der mit dem linearen Teil der Reifenkennlinie gleichgesetzt werden kann. Grundsätzlich wäre jedoch eine Dynamik für "r_by" wie vom "rsoll_acker"-Signal wünschenswert, so dass dann "r_by" bei dynamischen Übergängen ohne Reifensättigung keinen Einfluß auf den Giersollwert "rsoll_res" hätte. In der genannten nicht vorveröffentlichten deutschen Offenlegungsschrift DE 10 141 273 A1 ist nun beschrieben, wie dem Signal der Querbeschleunigung r_by" das dynamische Verhalten der Größe "rsoll_acker" aufgeprägt werden kann, d.h. wie ein Dynamikangleich von "r_by" an die Gierratensollwerte der Modellvorsteuerungen erfolgen kann.

Dabei soll im genannten Linearbereich der Abhängigkeit der Seitenkraft ("Fy") vom Schräglaufwinkel ("$\alpha$") das Signal "r_by" keinen Einfluss auf das Stellkommando haben. Erst wenn die Reifensättigung wirksam wird und der Wert von "r_by" absinkt, sollte "r_by" wirksam werden. Um dies zu gewährleisten, wurde vorgeschlagen, dass dem Signal "r_by" ein anderes Signal hinzuaddiert wird, das durch ein oder mehrere in den Modellvorsteuerungen enthaltene (s/n) Einspurmodell(e) ohne Schwierigkeiten zur Verfügung steht, nämlich die Schwimmwinkelgeschwindigkeit $\dot{\beta}$. Dieser soweit vorbekannte Dynamikangleich lässt sich also durch die folgende Gleichung [9] beschreiben:

$$[9] \qquad \text{r\_by\_filt} = \frac{by}{V} - \dot{\beta}_{Mod}(\delta_L)$$

Dieser Dynamikangleich kann nun an die in mit der vorliegenden Patentanmeldung eingeführten Maßnahmen angepasst werden, und zwar indem dieser durch einen zusätzlichen Lenkvorhalt, der durch ein DT1-Glied beschreibbar ist, ergänzt wird. Dieses DT1-Glied greift die Beschleunigung $by_{Mod}$ aus einem lenkwinkelabhängigen Einspurmodell ab, so dass man die folgende Gleichung [10] erhält:

$$[10] \qquad \text{r\_by\_filt} = \frac{1}{Ts+1}\frac{by}{V} - \dot{\beta}_{Mod}(\delta_L) + \frac{Ts}{Ts+1}\frac{by_{Mod}(\delta_L)}{V}$$

Dadurch wird eine durch das PT1-Glied in Gleichung [6] erzeugte Phasenverzögerung wieder rückgängig gemacht, wonach im genannten Linearbereich der Abhängigkeit der Reifenseitenkraft ("Fy") vom Schräglaufwinkel ("$\alpha$") der Verlauf von "r_by_filt" wieder dem Verlauf der gemessenen Gierrate "r" gleicht und somit das vereinfachte Reglerkommando "fb" auf dem Wert "Null" bleibt. Abweichungen der beiden Signale können sich dann nur noch durch die Modellungenauigkeiten des Einspurmodells ergeben, die aber relativ klein sind.

Die Stabiltät der Querbeschleunigungsrückführung wird dabei nicht angetastet, da die Addition von

$$\frac{Ts}{Ts+1}\frac{by_{Mod}(\delta_L)}{V}$$

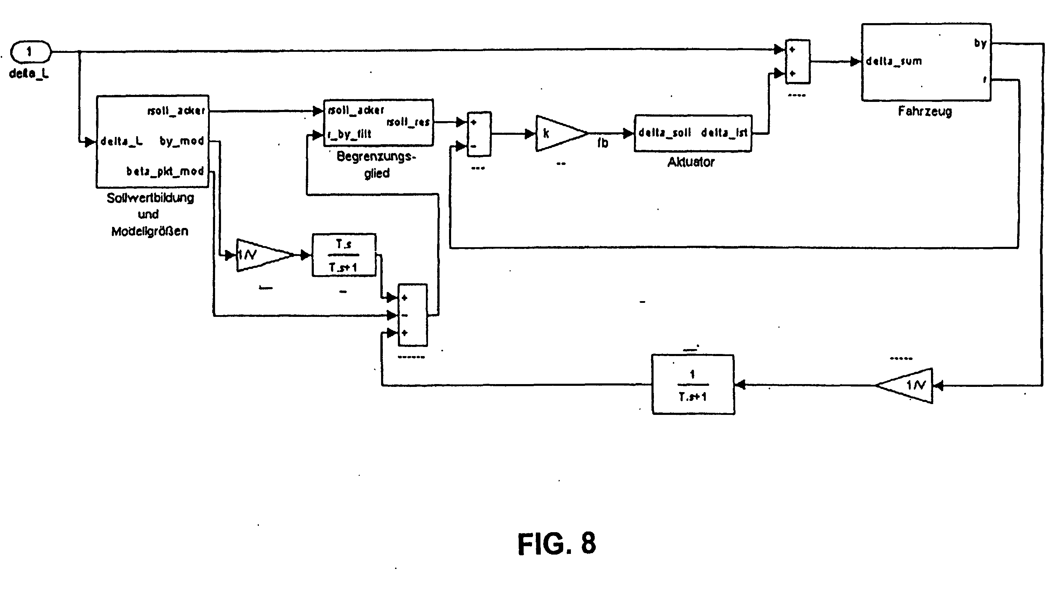

nur vom Lenkwinkel $\delta_L$ abhängt, das selbe gilt auch für die Subtraktion von $\dot{\beta}_{Mod}(\delta_L)$. In **Figur 8** ist diese Struktur, bei welcher der Quotient von Fahrzeugquerbeschleunigung und Fahrzeuggeschwindigkeit zur Bildung eines Vorhaltewertes um eine mit Hilfe eines lenkwinkelabhängigen Modells berechnete Schwimmwinkelgeschwindigkeit verringert wird, wobei hierfür, falls die genannte Filterung des Quotienten aus Fahrzeugquerbeschleunigung und Fahrzeuggeschwindigkeit in Form eines Verzögerungsgliedes erfolgt, eine daraus resultierende Phasenverzögerung durch ein Differentialglied DT1 im wesentlichen wieder rückgängig gemacht wird grafisch dargestellt.

Mit den vorgeschlagenen Maßnahmen lässt sich also die Zuverlässigkeit des Verfahrens nach Anspruch 1 erheblich steigern, wobei noch darauf hingewiesen sei, dass durchaus eine Vielzahl von Details abweichend von obigen Ausführungen gestaltet sein kann, ohne den Inhalt der Patentansprüche zu verlassen.

## Patentansprüche

1. Verfahren zur Erhöhung der Fahrstabilität bei einem Fahrzeug, welches durch einen Regeleingriff am Fahrzeug ein einer Fahrzeug-Instabilität entgegenwirkendes Giermoment bewirkt und wobei das Maß des Regeleingriffes von einem Reglerkommando abhängt, weiches in Abhängigkeit von der Differenz aus dem Quotienten von Fahrzeugquerbeschleunigung und Fahrzeuggeschwindigkeit einerseits und der tatsächlich auftretenden Gierrate andererseits bestimmt wird, derart, dass das Reglerkommando auch abhängig vom Minimum aus den Absolutwerten des geeignet gefilterten Quotienten aus Fahrzeugquerbeschleunigung und Fahrzeuggeschwindigkeit einerseits und eines in Abhängigkeit vom Fahrer-Lenkwinkel vorzugsweise unter Verwendung der Ackermann-Beziehung berechneten Gierraten-Sollwertes andererseits gewählt wird,
**dadurch gekennzeichnet, dass** das Reglerkommando in den Fällen, in denen der gefilterte Quotient aus Fahrzeugquerbeschleunigung und Fahrzeuggeschwindigkeit einerseits und der Gierraten-Sollwertes andererseits unterschiedliche Vorzeichen haben, den Wert "Null" annimmt.

2. Verfahren nach Anspruch 1,
**dadurch gekennzeichnet, dass** die Minimumbildung in Form ein sog. Begrenzungsglieds umgesetzt ist, in dem die Werte für den geeignet gefilterten Quotienten aus Fahrzeugquerbeschleunigung und Fahrzeuggeschwindigkeit einerseits und den in Abhängigkeit vom Fahrer-Lenkwinkel berechneten Gierraten-Sollwert andererseits verglichen werden, woraus sich das folgenden Reglerkommando ergibt:

   a) falls sich die genannten Eingangswerte in ihrem Vorzeichen unterscheiden, ist das Reglerkommando gleich "0"
   b) falls der Betrag des genannten Quotienten kleiner als der Betrag des Gierraten-Sollwertes ist, ist das Regierkommando gleich dem genannten Quotienten
   c) andernfalls ist das Reglerkommando gleich dem Gierraten-Sollwert

3. Verfahren nach Anspruch 1 oder 2,
**dadurch gekennzeichnet, dass** im Stationärfall der Gierraten-Sollwert größer als der genannte und geeignet gefilterte Quotient aus Fahrzeugquerbeschleunigung und Fahrzeuggeschwindigkeit ist.

4. Verfahren nach einem der vorangegangenen Ansprüche,
**dadurch gekennzeichnet, dass** der Quotient von Fahrzeugquerbeschleunigung und Fahrzeuggeschwindigkeit zur Bildung eines Vorhaltewertes um eine mit Hilfe eines lenkwinkelabhängigen Modells berechnete Schwimmwinkelgeschwindigkeit verringert wird.

5. Verfahren nach Anspruch 4,
**dadurch gekennzeichnet, dass** falls die genannte Filterung des Quotienten aus Fahrzeugquerbeschleunigung und Fahrzeuggeschwindigkeit in Form eines Verzögerungsgliedes erfolgt, eine daraus resultierende Phasenverzögerung durch ein Differentialglied im wesentlichen wieder rückgängig gemacht wird.

## Claims

1. A method of increasing the stability of a vehicle when driven, whereby a yawing moment counteracting instability of the vehicle is obtained by a control intervention and wherein the extent of the intervention depends on a control-unit command which is determined in dependence on the difference between, on the one hand, the quotient of the transverse acceleration of the vehicle and the speed of the vehicle and, on the other hand, the actual yawing rate such that the control-unit command is also selected in dependence on the minimum of the absolute values of the suitably filtered quotient of the transverse acceleration and speed on the one hand and of a set yawing rate calculated in dependence on the driver's steering angle preferably using the Ackermann relation, on the other hand, **characterised In that** in cases where the filtered quotient of the transverse acceleration and speed on the one hand and of the set yawing rate on the other hand have different signs, the controller command takes the value "zero".

**2.** A method according to claim 1, **characterised in that** the minimum formation is converted into a "boundary element" in which the suitably filtered quotient of the transverse acceleration and speed of the vehicle is compared with the set yawing rate calculated from the driver's steering angle, the result being the following control-unit command:

 a) if the set input values differ in sign, the control-unit command is equal to "0"
 b) if the said quotient is smaller than the set yawing rate, the control-unit command is equal to the said quotient,
 c) otherwise the control-unit command is equal to the set yawing rate.

**3.** A method according to claim 1 or 2, **characterised in that** when the vehicle is stationary, the set yawing rate is greater than the said suitably filtered quotient of the transverse acceleration and the speed.

**4.** A method according to any of the preceding claims, **characterised in that** in order to obtain a guiding value, the quotient of the transverse acceleration and the speed is reduced by a floating-angle speed calculated with the help of a model in dependence on the steering angle.

**5.** A method according to claim 4, **characterised in that** if the said filtering of the quotient of the transverse acceleration and speed is in the form of a delay element, a resulting phase delay is substantially cancelled by a differential element.


**Revendications**

**1.** Procédé pour augmenter la stabilité d'un véhicule, qui provoque, par une intervention de régulation au niveau du véhicule, un couple de lacet agissant contre une instabilité du véhicule, et dans lequel la proportion de l'intervention de régulation dépend d'une commande de régulateur qui est déterminée en fonction de la différence entre le quotient de l'accélération transversale du véhicule sur la vitesse du véhicule d'une part et en fonction du taux de lacet apparaissant effectivement d'autre part, de telle sorte que la commande de régulateur est également sélectionnée en fonction du minimum des valeurs absolues du quotient, filtré de façon appropriée, de l'accélération transversale du véhicule sur la vitesse du véhicule d'une part, et d'une valeur de consigne du taux de lacet calculée en fonction de l'angle de braquage du conducteur de préférence à l'aide de la relation Ackermann d'autre part, **caractérisé en ce que** la commande de régulateur prend la valeur « zéro », dans les cas où le quotient filtré de l'accélération transversale du véhicule sur la vitesse du véhicule d'une part et la valeur de consigne du taux de lacet d'autre part sont de signe différent.

**2.** Procédé selon la revendication 1, **caractérisé en ce que** la formation de minimum est appliquée sous forme d'un dénommé membre de limitation, en comparant les valeurs pour le quotient filtré de façon appropriée de l'accélération transversale du véhicule sur la vitesse du véhicule d'une part, et la valeur de consigne du taux de lacet calculée en fonction de l'angle de braquage du conducteur d'autre part, ce qui donne la commande de régulateur suivante :

 a) si les valeurs d'entrée mentionnées sont de signe différent, la commande de régulateur est égale à « 0 »,
 b) si la valeur du quotient mentionné est plus faible que la valeur de consigne du taux de lacet, la commande de régulateur est égale au quotient mentionné,
 c) sinon, la commande de régulateur est égale à la valeur de consigne du taux de lacet.

**3.** Procédé selon la revendication 1 ou 2, **caractérisé en ce que** dans le cas stationnaire, la valeur de consigne du taux de lacet est supérieure au quotient mentionné filtré de façon appropriée de l'accélération transversale du véhicule sur la vitesse du véhicule.

**4.** Procédé selon l'une des revendications précédentes, **caractérisé en ce que** le quotient de l'accélération transversale du véhicule sur la vitesse du véhicule, pour la formation d'une valeur de retenue, est diminué d'une vitesse angulaire de dérapage calculée à l'aide d'un modèle dépendant de l'angle de braquage.

**5.** Procédé selon la revendication 4,
**caractérisé en ce que**
dans le cas où la filtration mentionnée du quotient de l'accélération transversale du véhicule sur la vitesse du véhicule s'effectue sous la forme d'un circuit de retard, un déphasage résultant est pour l'essentiel à nouveau annulé par le biais d'un circuit différentiel.

**FIG. 1**

**FIG. 2**

EP 1 362 754 B1

EP 1 362 754 B1

1

delta_L

delta_sum    by

Fahrzeug

+
−

k    fb

delta_soll  delta_ist

Aktuator

1/V

**FIG. 3**

FIG. 4

FIG. 5

FIG. 6

FIG. 7

**FIG. 8**

EP 1 362 754 B1